# EUROPEAN PATENT SPECIFICATION

(11) **EP 2 781 829 B1**
(45) Date of publication and mention of the grant of the patent: **31.01.2018**
(21) Application number: 14153389.3
(22) Date of filing: 31.01.2014
(51) Int. Cl.: F21V 7/04, G02B 27/09, G02B 19/00

(54) **Reflector for illuminating device and illuminating device comprising the reflector**
Reflektor für Beleuchtungsvorrichtung und Beleuchtungsvorrichtung mit dem Reflektor
Réflecteur pour dispositif d'éclairage et dispositif d'éclairage comprenant le réflecteur

(30) Priority: 18.03.2013 CN 201310086442
(43) Date of publication of application: 24.09.2014
(73) Proprietor: OSRAM GmbH, 80807 München (DE)
(72) Inventor: Ming, Yusheng, Shenzhen Guangdong 518053 (CN); Li, Zhian, Shenzhen Guangdong 518053 (CN); Li, Hao, Shenzhen Guangdong 518053 (CN); Zhang, Qihui, Shenzhen Guangdong 518053 (CN)

(56) References cited:
- EP-A1- 0 076 243
- US-A1- 2008 297 907
- US-A1- 2009 116 220
- US-A1- 2011 019 406
- US-B1- 6 450 667
- US-B2- 7 152 977
- FLORIAN R. FOURNIER ET AL: "Freeform reflector design using integrable maps", PROCEEDINGS OF SPIE, vol. 7652, 1 July 2010 (2010-07-01), page 765221, XP055125556, ISSN: 0277-786X, DOI: 10.1117/12.871014

## Description

### Technical Field

The present invention relates to a reflector for an illuminating device. In addition, the present invention further relates to an illuminating device comprising the reflector.

### Background Art

With the public's increasingly high requirement for illumination and increasingly enhanced awareness of environmental protection and energy conservation, people are increasingly willing to use an LED illuminating device as a light source for the reason that the LED illuminating device has a long service life, a high lighting efficiency, and a low energy consumption. In places like a gas station, since it is generally open for 24 hours, the LED illuminating device is more capable of reducing significantly the operation cost of an operator by virtue of its characteristic of low energy consumption. Moreover, the LED cold light source, due to its unique anti-explosion performance, is more suitable to be applied to the place with a higher requirement for anti-explosion performance such as the gas station.

Generally, the LED illuminating device is mounted on the roof of the refueling region of the gas station. A lens capable of generating a rectangular light spot or a lens capable of generating a round light spot is generally used in such an LED illuminating device so as to achieve the illumination for the fueling place. However, there poses a problem: a plurality of fueling pumps regularly disposed are present in the gas station; .these fueling pumps stand upright on the ground and the display area displaying filling quantity and price generally has a certain height off the ground to facilitate reading for the staff and oil filling persons; the light spot generated by a general lens is merely capable of achieving an effective illumination for the floor of the fueling place rather than for the display region of the fueling pump. This type of lens fails to provide an effective illumination for the display region of the fueling pump. According to past experience, the average illuminance value for the ground shall reach 300 lux, while the average illuminance value for the display region of the fueling pump shall reach 150 lux for effective reading. Obviously, the known lens can merely satisfy the illumination requirement for ground rather than the illumination requirement for fueling pump.

Moreover, US 6,450,667 discloses a lamp and a reflector. EP 0 076 243 A1 discloses an omnidirectional reflector. US 2011/0019406 A1 discloses a reflecting cover and an illumination device using the same. US 2008/0297907 A1 discloses a seamless molded reflectant material. US 2009/0116220 A1 discloses an illumination system for illuminating a display device. US 7,152,977 discloses a solid state light engine optical system. Finally, Florian R. Fournier et al. discloses "Freeform Reflector Design Using Integrable Maps", Proceedings of Spie, vol. 7652, July 1, 210, page 765221.

### Summary of the Invention

In order to solve the above technical problem, the present invention proposes a reflector for an illuminating device according to claim 1 as well as an illuminating device according to claim 10. Light from the light source of the illuminating device is reflected by the reflector to form a light spot with a suitable shape, which provides a good illumination not only for the ground but also for an object to be illuminated, which stands on the ground. In addition, the present invention also provides an illuminating device comprising the reflector.

The first object of the present invention is achieved by a reflector for an illuminating device, comprising a base plate and a circumferential wall extending from an edge of the base plate in a direction away from the base plate, the circumferential wall defining a first reflective surface, wherein the first reflective surface has a first butterfly's wing-shaped profile in a cross section, and the circumferential wall extends from the base plate in an expanding manner. Since the reflector has a butterfly's wing-shaped profile in a cross section, the light reflected by the reflector will also form a butterfly's wing-shaped light spot on the region to be illuminated. In an practical application environment such as a gas station, after the position of the reflector is adjusted, the four butterfly's wingtip regions of the butterfly's wing-shaped light spot generated by such reflector can exactly illuminate the corresponding region of the fueling pump to be illuminated, thereby enabling good observation of the display region of the fueling pump, without affecting illumination for the ground.

The circumferential wall comprises four first regions and four second regions connected between the first regions, wherein the first regions and the second regions are so configured that the circumferential wall has the first butterfly's wing-shaped profile in a cross section. Seen in the circumferential direction of the circumferential wall, the first regions and the second regions are connected sequentially, such that the reflective surface forms a regular zigzag trend, wherein the light emitted after being reflected by the first region has a greater emergent angle than the light emitted after being reflected by the second region, such that the light reflected by the first region forms butterfly's wingtip regions of a butterfly's wing-shaped light spot in a region to be illuminated, and the butterfly's wingtip regions can exactly be emitted onto, for example, the display region of the fueling pump.

Moreover, the first reflective surface is configured to be at least symmetrical with respect to two first symmetry planes orthogonal to each other and two second symmetry planes orthogonal to each other, wherein the first symmetry plane and the second symmetry plane are different from each other. In the design solution of the present invention, the first symmetry plane goes through the first region, and portions of each first region on the two sides of the first symmetry plane are mirror-symmetrical with respect to the first symmetry plane. In addition, the second symmetry plane goes through the second region, and portions of each second region on the two sides of the second symmetry plane are mirror-symmetrical with respect to the second symmetry plane.

Also, the first butterfly's wing-shaped profile comprises four third curves symmetrical with respect to the first symmetry plane and four fourth curves symmetrical with respect to the second symmetry plane, wherein the third curves and the fourth curves are spaced apart from each other and are in a smooth transition. The eight curves jointly define the first butterfly's wing-shaped profile, which actually is the profile of the opening end of the reflector. The profile of the light spot formed by the light after being reflected by the reflector depends largely on the actual profile of the opening end of the reflector.

Further according to the present invention, the first region and the first symmetry plane intersect to form a first curve, wherein the first curve is configured as a curve curved towards an intersection line between the first symmetry plane and the second symmetry plane. This trend of the portion of the reflective surface in the first region in a longitudinal direction of the reflector is more advantageous to the formation of four obvious butterfly's wingtip portions of the butterfly's wing-shaped light spot. The longitudinal direction mentioned herein shall be understood as the direction from the opening.end of the reflector to the base plate, or the opposite direction.

Further according to the present invention, the second region and the second symmetry plane intersect to form a second curve, wherein the second curve is configured as a curve curved away from the intersection line between the first symmetry plane and the second symmetry plane. This trend of the portion of the reflective surface in the second region in the longitudinal direction of the reflector is more advantageous to the formation of concave portions between four obvious butterfly's wingtip portions of the butterfly's wing-shaped light spot.

According to the present invention, the base plate has a second butterfly's wing-shaped profile and defines a second reflective surface. Like the circumferential wall, the base plate also has a similar butterfly's wing-shaped profile in a cross section, and such profile of the base plate is beneficial to the circumferential wall in forming a butterfly's wing-shaped profile in a cross section. Moreover, the base plate itself serves as a carrier of a light source, and a reflective surface can also be formed on the base plate. The reflective surface is capable of reflecting the light emitted onto the base plate towards the first reflective surface of the circumferential wall, or directly towards a region to be illuminated, which greatly reduces light loss.

Preferably, the first symmetry plane and the second symmetry plane form an angle of 45°. In this way, the four butterfly's wingtip portions of the butterfly's wing-shaped light spot obtained by this reflector have the same profile.

Preferably, the first curve is obtainable by the formula *y*=-0.1111×2+5.1667*x*-27, where x and y are an abscissa and an ordinate of an x-y coordinate system in the first symmetry plane, respectively.

Preferably, the second curve is obtainable by the formula *y*=0.2806×2+1.0937*x*-10.604, where x and y are an abscissa and an ordinate of an x-y coordinate system in the second symmetry plane, respectively.

Preferably, the third curve is configured as a circular arc having a first predetermined radius. The radius of the arc forming the third curve is determined according to the design needs or according to the profile of the butterfly's wingtips of the butterfly's wing-shaped light spot to be formed. This can be simulated through experiments so as to determine the ideal first predetermined radius.

Further according to the present invention, the second butterfly's wing-shaped profile comprises four fifth curves symmetrical with respect to the first symmetry plane and four sixth curves symmetrical with respect to the second symmetry plane, wherein the fifth curves and the sixth curves are spaced apart from each other and are in a smooth transition. The eight curves define the second butterfly's wing-shaped profile of the base plate.

Preferably, the fifth curve is configured as a circular arc having a second predetermined radius, wherein the first predetermined radius is greater than or equal to the second predetermined radius. The second predetermined radius can also be determined by experimental simulation results, so as to obtain an ideal light spot, in conjunction with the first predetermined radius.

According to the present invention, the reflector comprises a base made from a metal or plastics, and a reflective coating provided on the base.

Advantageously, the reflective coating is formed on the base by a coating, plating or anodizing process.

The other object of the present invention is achieved by an illuminating device, comprising a light source and a reflector as described above, wherein the light source is arranged at a symmetry center of the base plate in an accommodation cavity defined by the reflector.

Preferably, the light source is an LED light source, wherein the LED light source has the advantages of high luminous efficiency, long service life and energy saving.

It is to be understood that the features of the various exemplary embodiments described herein may be combined with each other, unless specifically noted otherwise.

### Brief Description of the Drawings

The drawings constitute a portion of the Description for further understanding of the present invention. These drawings illustrate the embodiments of the present invention and explain the principle of the present invention together with the Description. In the drawings, the same part is represented by the same reference sign. In the drawings,
Fig. 1 is a perspective view of the reflector according to the present invention;
Fig. 2 is a top view of the reflector according to the present invention;
Fig. 3 is a sectional view of the reflector according to the present invention taken by the first symmetry plane;
Fig. 4 is a sectional view of the reflector according to the present invention taken by the second symmetry plane;
Fig. 5 is a cross-sectional view of the reflector according to the present invention at the opening;
Fig. 6 is a cross-sectional view of the reflector according to the present invention at the base plate;
Fig. 7 is a schematic diagram of optical path of light reflected by the reflector according to the present invention; and
Fig. 8 is a diagram of light intensity distribution of light reflected by the reflector according to the present invention.

### Detailed Description of the Embodiments

In the following detailed Description, reference is made to the accompanying drawings, which form a part hereof, and in which is shown by way of illustration specific embodiments in which the invention may be practiced. In this regard, directional terminology, such as "top", "bottom" "transverse" "longitudinal" etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

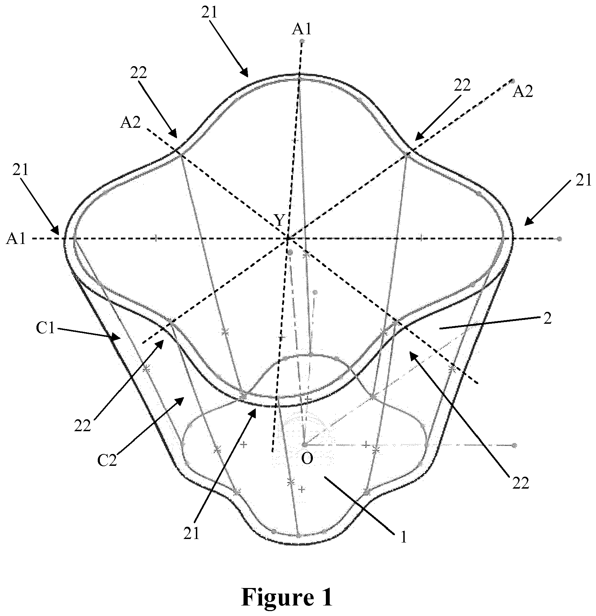

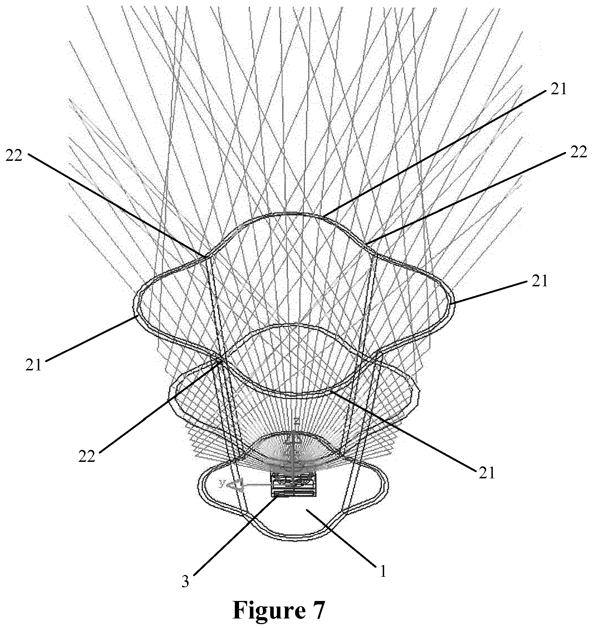

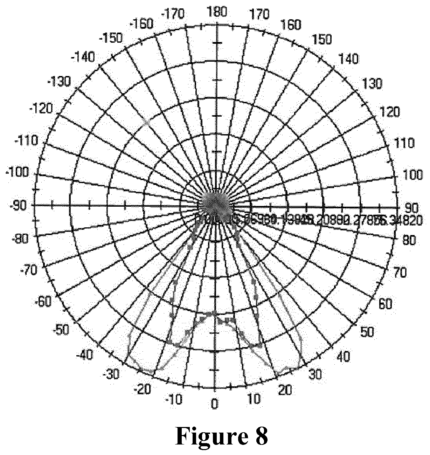

Fig. 1 is a perspective view of the reflector 100 according to the present invention. As can be seen from the figure, the reflector 100 comprises a base plate 1 and a circumferential wall 2 extending from an edge of the base plate 1 in a direction away from the base plate 1, the circumferential wall defining a first reflective surface, wherein the circumferential wall 2 extends from the base plate 1 in an expanding manner. In the design solution of the present invention, the circumferential wall 2 comprises four first regions 21 and four second regions 22 connected between the first regions 21. As can be seen from the figure, the first reflective surface is configured to be at least symmetrical with respect to two first symmetry planes A1 orthogonal to each other and two second symmetry planes A2 orthogonal to each other, wherein the first symmetry plane A1 and the second symmetry plane A2 are different from each other. In this embodiment, the first symmetry plane A1 and the second symmetry plane A2 form an angle of 45°. In addition, the first symmetry plane A1 goes through the first region 21, and portions of each first region 21 on the two sides of the first symmetry plane A1 are mirror-symmetrical with respect to the first symmetry plane A1; and the second symmetry plane A2 goes through the second region 22, and portions of each second region 22 on the two sides of the second symmetry plane A2 are mirror-symmetrical with respect to the second symmetry plane A2. Furthermore, seen in the circumferential direction of the circumferential wall 2, the first regions 21 and the second regions 22 are connected sequentially, such that the first reflective surface forms a regular zigzag trend, wherein the light emitted after being reflected by the first region 21 has a greater emergent angle than the light emitted after being reflected by the second region 22 (see Figs. 7 and 8), such that the light reflected by the first region 21 forms butterfly's wingtip regions of a butterfly's wing-shaped light spot in a region to be illuminated, and the butterfly's wingtip regions can exactly be emitted onto, for example, the display region of the fueling pump.

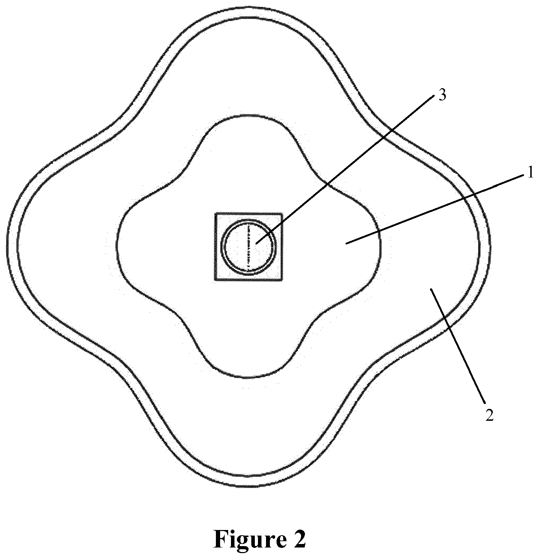

In the design solution of the present invention, a light source 3 of an illuminating device needs to be mounted at a symmetry center O of the base plate 1. For the sake of clarity, the light source 3 configured as an LED light source is not shown in Fig. 1. As clearly shown in Figs. 2-7, the light source 3 has already been mounted at the symmetry center O of the base plate 1 in an accommodation cavity of the reflector 100 defined by the circumferential wall 2 and base plate 1.

In addition, in the design solution of the present invention, the reflector 100 comprises a base made from a metal or plastics, and a reflective coating provided on the base. Preferably, the reflective coating is formed on the base by a coating, plating or anodizing process.

Fig. 2 is a top view of the reflector 100 according to the present invention. As can be seen from the figure, the circumferential wall 2 of the reflector 100 has a first butterfly's wing-shaped profile when seen in a cross section, especially when seen in a cross section at the opening, while the base plate 1 has a second butterfly's wing-shaped profile, wherein it is apparent that the area of the first butterfly's wing-shaped profile is significantly greater than the area of the second butterfly's wing-shaped profile. In addition, a side of the circumferential wall 2 facing the light source 3 is configured as a first reflective surface, and a side of the base plate 1 carrying the light source 3 is configured as a second reflective surface.

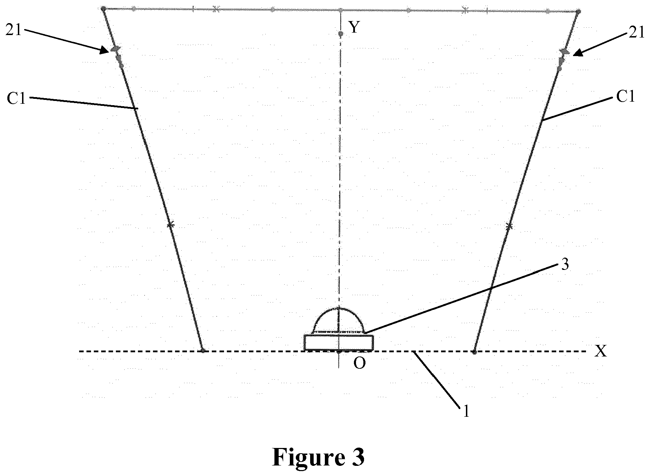

Fig. 3 is a sectional view of the reflector 100 according to the present invention taken by the first symmetry plane A1. As can be seen from the figure, the first region 21 and the first symmetry plane A1 intersect to form a first curve C1, wherein the first curve C1 is configured as a curve curved towards an intersection line OY between the first symmetry plane A1 and the second symmetry plane A2. This trend of the portion of the reflective surface in the first region 21 in a longitudinal direction of the reflector 100 is more advantageous to the formation of four obvious butterfly's wingtip portions of the butterfly's wing-shaped light spot. The longitudinal direction mentioned herein shall be understood as the direction from the opening end of the reflector 100 to the base plate 1, or the opposite direction. In fact, the intersection line OY corresponds to the optical axis of the light source 3. In this embodiment, the first curve C1 is obtainable by the formula *y*=-0.1111×2+5.1667*x*-27, where x and y are an abscissa and an ordinate of an x-y coordinate system in the first symmetry plane A1, respectively.

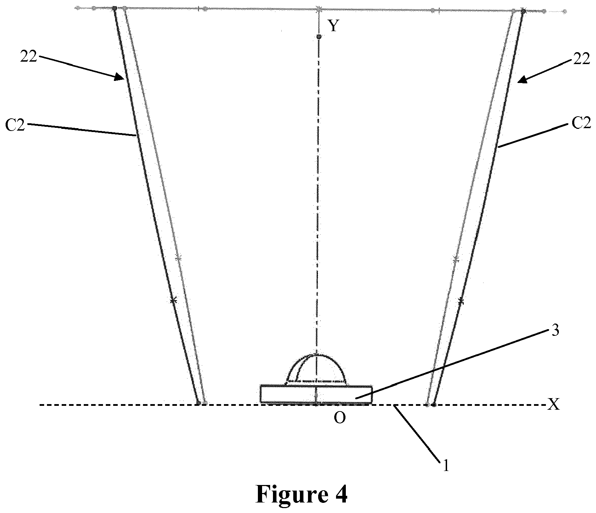

Fig. 4 is a sectional view of the reflector 100 according to the present invention taken by the second symmetry plane A2. As can be seen from the figure, the second region 22 and the second symmetry plane A2 intersect to form a second curve C2, wherein the second curve C2 is configured as a curve curved away from the intersection line OY between the first symmetry plane A1 and the second symmetry plane A2, wherein the second curve C2 is obtainable by the formula *y*=0.2806×2+1.0937*x*-10.604, where x and y are an abscissa and an ordinate of an x-y coordinate system in the second symmetry plane A2, respectively.

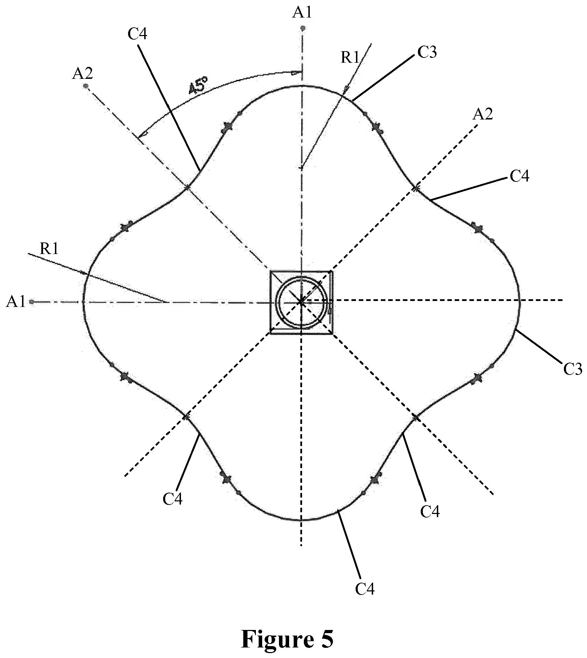

Fig. 5 is a sectional view of the reflector 100 according to the present invention at the opening. As can be seen from the figure, the opening has a first butterfly's wing-shaped profile, wherein the first butterfly's wing-shaped profile comprises four third curves C3 symmetrical with respect to the first symmetry plane A1 and four fourth curves C4 symmetrical with respect to the second symmetry plane A2, wherein the third curves C3 and the fourth curves C4 are spaced apart from each other and are in a smooth transition. In addition, the third curve C3 is configured as a circular arc having a first predetermined radius R1. The radius of the arc forming the third curve is determined according to the design needs or according to the profile of the butterfly's wingtips of the butterfly's wing-shaped light spot to be formed. This can be simulated through experiments so as to determine the ideal first predetermined radius R1.

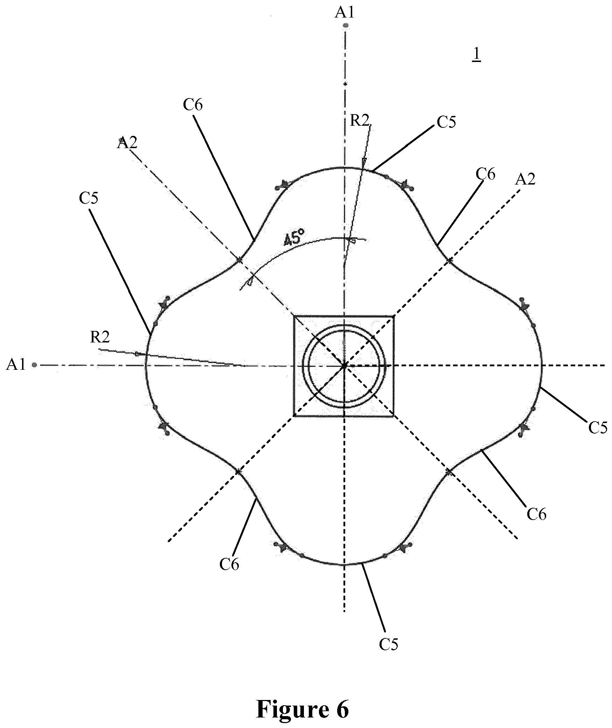

Fig. 6 is a cross-sectional view of the reflector according to the present invention at the base plate 1. As can be seen from the figure, the edge of the base plate 1 has a second butterfly's wing-shaped profile which comprises four fifth curves C5 symmetrical with respect to the first symmetry plane A1 and four sixth curves C6 symmetrical with respect to the second symmetry plane A2, wherein the fifth curves C5 and the sixth curves C6 are spaced apart from each other and are in a smooth transition, wherein the fifth curve C5 is configured as a circular arc having a second predetermined radius R2, wherein the first predetermined radius R1 is greater than or equal to the second predetermined radius R2. In the design solution of the present invention, the second predetermined radius R2 can also be determined by experimental simulation results, so as to obtain an ideal light spot, in conjunction with the first predetermined radius R1.

The fourth curve C4 and the sixth curve C6 are not specifically described herein, as the two curves are actually curves which smoothly connect the third curves C3 and smoothly connect the fifth curves C5, respectively, and are curved towards the light source. The trend of the two curves can be determined by experimental simulation.

Fig. 7 is a schematic diagram of optical path of light reflected by the reflector 100 according to the present invention. As can be clearly seen from the figure, light from the light source 3 emerges towards the first reflective surface, as the first region 21 of the first reflective surface has an expanding trend, which is significantly larger than the second region 22, the opening in the first region 21.has smaller blocking effect on the light, and thereby, at least a portion of the light emerging at the opening of the first region 21 forms the butterfly's wingtip regions of the butterfly's wing-shaped light spot.

Fig. 8 is a diagram of light intensity distribution of light reflected by the reflector 100 according to the present invention. As can be seen from the figure, two light spots having a butterfly's wingtip-shaped profile provide sufficient illumination intensity and also provide sufficient illumination intensity for the ground area illuminated.

The above is merely preferred embodiments of the present invention but not to limit the present invention. For the person skilled in the art, the present invention may have various alterations and changes.

## Claims

1. A reflector (100) for an illuminating device, comprising a base plate (1) and a circumferential wall (2) extending from an edge of the base plate (1) in a direction away from the base plate (1), the circumferential wall (2) defines a first reflective surface and extends from the base plate (1) in an expanding manner, wherein the base plate (1) itself serves as a carrier of a light source (3), the first reflective surface has a first butterfly's wing-shaped profile in a cross section which is configured to form four butterfly's wingtip portions of a butterfly's wing-shaped light spot, wherein:
- the first reflective surface is configured to be at least symmetrical with respect to two first symmetry planes (A1) orthogonal to each other and two second symmetry planes (A2) orthogonal to each other, wherein the first symmetry plane (A1) and the second symmetry plane (A2) are different from each other,
- the circumferential wall (2) comprises four first regions (21) and four second regions (22) connected between the first regions (21), wherein the first regions (21) and the second regions (22) are so configured that the circumferential wall (2) has the first butterfly's wing-shaped profile in a cross section so that, at the opening, the first butterfly's wing-shaped profile comprises four third curves (C3) symmetrical with respect to the first symmetry plane (A1) and four fourth curves (C4) symmetrical with respect to the second symmetry plane (A2), wherein the third curves (C3) and the fourth curves (C4) are spaced apart from each other and are in a smooth transition,
- the third curve (C3) is configured as a circular arc having a first predetermined radius (R1), and
- the fourth curve (C4) is curved towards the light source,
- the first region (21) and the first symmetry plane (A1) intersect to form a first curve (C1), wherein the first curve (C1) is configured as a curve curved towards an intersection line (OY) between the first symmetry plane (A1) and the second symmetry plane (A2),
- the second region (22) and the second symmetry plane (A2) intersect to form a second curve (C2), wherein the second curve (C2) is configured as a curve curved away from the intersection line (OY) between the first symmetry plane (A1) and the second symmetry plane (A2).

2. The reflector (100) according to Claim 1, **characterized in that**, the base plate (1) has a second butterfly's wing-shaped profile and defines a second reflective surface.

3. The reflector (100) according to Claim 1 or 2, **characterized in that**, the first symmetry plane (A1) and the second symmetry plane (A2) form an angle of 45°.

4. The reflector (100) according to Claim 1 or 2, **characterized in that**, the first curve (C1) is obtainable by the formula *y*=-0.1111×2+5.1667*x*-27, where x and y are an abscissa and an ordinate of an x-y coordinate system in the first symmetry plane (A1), respectively.

5. The reflector (100) according to Claim 1 or 2, **characterized in that**, the second curve (C2) is obtainable by the formula *y*=0.2806×2+1.0937*x*-10.604, where x and y are an abscissa and an ordinate of an x-y coordinate system in the second symmetry plane (A2), respectively.

6. The reflector (100) according to Claim 1 or 2, **characterized in that**, the second butterfly's wing-shaped profile comprises four fifth curves (C5) symmetrical with respect to the first symmetry plane (A1) and four sixth curves (C6) symmetrical with respect to the second symmetry plane (A2), wherein the fifth curves (C5) and the sixth curves (C6) are spaced apart from each other and are in a smooth transition.

7. The reflector (100) according to Claim6, **characterized in that**, the fifth curve (C5) is configured as a circular arc having a second predetermined radius (R2), wherein the first predetermined radius (R1) is greater than or equal to the second predetermined radius (R2).

8. The reflector (100) according to Claim 1 or 2, **characterized in that**, the reflector (100) comprises a base made from a metal or plastics, and a reflective coating provided on the base.

9. The reflector (100) according to Claim 8, **characterized in that**, the reflective coating is formed on the base by a coating, plating or anodizing process.

10. An illuminating device, comprising a light source (3), **characterized in that**, the illuminating device further comprises a reflector (100) according to any of Claims 1-9, wherein the light source is arranged at a symmetry center (O) of the base plate (1) in an accommodation cavity defined by the reflector (100).

11. The illuminating device according to Claim 10, **characterized in that**, the light source (3) is an LED light source.

## Patentansprüche

1. Reflektor (100) für eine Beleuchtungsvorrichtung, umfassend eine Bodenplatte (1) und eine umlaufende Wandung (2), die sich von einem Rand der Bodenplatte (1) in einer Richtung weg von der Bodenplatte (1) erstreckt, wobei die umlaufende Wandung (2) eine erste reflektierende Oberfläche definiert und sich von der Bodenplatte (1) in sich aufweitender Weise erstreckt, wobei die Bodenplatte (1) selbst als Träger einer Lichtquelle (3) dient, wobei die erste reflektierende Oberfläche ein erstes schmetterlingsflügelförmiges Profil in einem Querschnitt aufweist, der ausgelegt ist, vier Schmetterlingsflügelspitzen-Abschnitte eines schmetterlingsflügelförmigen Lichtspots auszubilden, wobei:
- die erste reflektierende Oberfläche ausgelegt ist, wenigstens symmetrisch bezüglich zweier erster zueinander orthogonaler Symmetrieebenen (A1) und zweier zweiter zueinander orthogonaler Symmetrieebenen (A2) zu sein, wobei die erste Symmetrieebene (A1) und die zweite Symmetrieebene (A2) voneinander verschieden sind,
- die umlaufende Wandung (2) vier erste Bereiche (21) und vier zwischen den ersten Bereichen (21) verbundene zweite Bereiche (22) umfasst, wobei die ersten Bereiche (21) und die zweiten Bereiche (22) so ausgelegt sind, dass die umlaufende Wandung (2) das erste schmetterlingsflügelförmige Profil in einem Querschnitt aufweist, so dass, an der Öffnung, das erste schmetterlingsflügelförmige Profil vier bezüglich der ersten Symmetrieebene (A1) symmetrische dritte Kurven (C3) und vier bezüglich der zweiten Symmetrieebene (A2) symmetrische vierte Kurven (C4) umfasst, wobei die dritten Kurven (C3) und die vierten Kurven (C4) im Abstand voneinander angeordnet sind und fließend ineinander übergehen,
- die dritte Kurve (C3) als Kreisbogen ausgelegt ist, der einen ersten vorbestimmten Radius (R1) aufweist, und
- die vierte Kurve (C4) zur Lichtquelle hin gekrümmt ist,
- der erste Bereich (21) und die erste Symmetrieebene (A1) sich schneiden, um eine erste Kurve (C1) auszubilden, wobei die erste Kurve (C1) als eine zu einer Schnittgeraden (OY) zwischen der ersten Symmetrieebene (A1) und der zweiten Symmetrieebene (A2) hin gekrümmte Kurve ausgelegt ist,
- der zweite Bereich (22) und die zweite Symmetrieebene (A2) sich schneiden, um eine zweite Kurve (C2) auszubilden, wobei die zweite Kurve (C2) als eine von der Schnittgeraden (OY) zwischen der ersten Symmetrieebene (A1) und der zweiten Symmetrieebene (A2) weg gekrümmte Kurve ausgelegt ist.

2. Reflektor (100) gemäß Anspruch 1, **dadurch gekennzeichnet, dass** die Bodenplatte (1) ein zweites schmetterlingsflügelförmiges Profil aufweist und eine zweite reflektierende Oberfläche definiert.

3. Reflektor (100) gemäß Anspruch 1 oder 2, **dadurch gekennzeichnet, dass** die erste Symmetrieebene (A1) und die zweite Symmetrieebene (A2) einen Winkel von 45° ausbilden.

4. Reflektor (100) gemäß Anspruch 1 oder 2, **dadurch gekennzeichnet, dass** die erste Kurve (C1) durch die Formel *y*=-0,1111×2+5,1667*x*-27 erhaltbar ist, wobei x und y jeweils eine Abszisse und eine Ordinate eines x-y-Koordinatensystems in der ersten Symmetrieebene (A1) sind.

5. Reflektor (100) gemäß Anspruch 1 oder 2, **dadurch gekennzeichnet, dass** die zweite Kurve (C2) durch die Formel *y*=0,2806×2+1,0937*x*-10,604 erhaltbar ist, wobei x und y jeweils eine Abszisse und eine Ordinate eines x-y-Koordinatensystems in der zweiten Symmetrieebene (A2) sind.

6. Reflektor (100) gemäß Anspruch 1 oder 2, **dadurch gekennzeichnet, dass** das zweite schmetterlingsflügelförmige Profil vier bezüglich der ersten Symmetrieebene (A1) symmetrische fünfte Kurven (C5) und vier bezüglich der zweiten Symmetrieebene (A2) symmetrische sechste Kurven (C6) umfasst, wobei die fünften Kurven (C5) und die sechsten Kurven (C6) im Abstand voneinander angeordnet sind und fließend ineinander übergehen.

7. Reflektor (100) gemäß Anspruch 6, **dadurch gekennzeichnet, dass** die fünfte Kurve (C5) als Kreisbogen ausgelegt ist, der einen zweiten vorbestimmten Radius (R2) aufweist, wobei der erste vorbestimmte Radius (R1) größer oder gleich dem zweiten vorbestimmten Radius (R2) ist.

8. Reflektor (100) gemäß Anspruch 1 oder 2, **dadurch gekennzeichnet, dass** der Reflektor (100) einen Boden aus Metall oder Kunststoff und eine auf dem Boden bereitgestellte reflektierende Beschichtung umfasst.

9. Reflektor (100) gemäß Anspruch 8, **dadurch gekennzeichnet, dass** die reflektierende Beschichtung auf dem Boden durch einen Beschichtungs-, Plattierungs- oder Anodisierungsprozess ausgebildet ist.

10. Beleuchtungsvorrichtung, umfassend eine Lichtquelle (3), **dadurch gekennzeichnet, dass** die Beleuchtungsvorrichtung ferner einen Reflektor (100) gemäß einem der Ansprüche 1-9 umfasst, wobei die Lichtquelle an einem Symmetriezentrum (0) der Bodenplatte (1) in einer durch den Reflektor (100) definierten Aufnahmekavität angeordnet ist.

11. Beleuchtungsvorrichtung gemäß Anspruch 10, **dadurch gekennzeichnet, dass** die Lichtquelle (3) eine LED-Lichtquelle ist.

## Revendications

1. Réflecteur (100) destiné à un dispositif d'éclairage, comprenant une plaque de base (1) et une paroi circonférentielle (2) s'étendant d'un bord de la plaque de base (1) dans une direction s'éloignant de la plaque de base (1), la paroi circonférentielle (2) définit une première surface réfléchissante et s'étend à partir de la plaque de base (1) de manière extensible, dans lequel la plaque de base (1) sert elle-même de support d'une source lumineuse (3), la première surface réfléchissante possède un premier profil en forme d'aile de papillon dans une section transversale qui est configurée pour former quatre parties de pointe d'aile de papillon d'un point lumineux en forme d'aile de papillon, dans lequel :
- la première surface réfléchissante est configurée pour être au moins symétrique par rapport aux deux premiers plans symétriques (A1) orthogonaux l'un à l'autre et aux deux seconds plans symétriques (A2) orthogonaux l'un à l'autre, dans lequel le premier plan symétrique (A1) et le second plan symétrique (A2) sont différents l'un de l'autre,
- la paroi circonférentielle (2) comprend quatre premières régions (21) et quatre secondes régions (22) reliées entre les premières régions (21), dans lequel les premières régions (21) et les secondes régions (22) sont configurées de sorte que la paroi circonférentielle (2) possède le premier profil en forme d'aile de papillon dans une section transversale afin que, au moment de l'ouverture, le premier profil en forme d'aile de papillon comprend quatre troisièmes courbes (C3) symétriques par rapport au premier plan symétrique (A1) et quatre quatrièmes courbes (C4) symétriques par rapport au second plan symétrique (A2), dans lequel les troisièmes courbes (C3) et les quatrièmes courbes (C4) sont espacées les unes des autres et sont en transition douce,
- la troisième courbe (C3) est configurée comme un arc circulaire ayant un premier rayon prédéterminé (R1), et
- la quatrième courbe (C4) est courbée vers la source lumineuse,
- la première région (21) et le premier plan symétrique (A1) se croisent pour former une première courbe (C1), dans lequel la première courbe (C1) est configurée comme une courbe courbée vers une ligne d'intersection (OY) entre le premier plan symétrique (A1) et le second plan symétrique (A2),
- la seconde région (22) et le second plan symétrique (A2) se croisent pour former une deuxième courbe (C2), dans lequel la deuxième courbe (C2) est configurée comme une courbe courbée à distance de la ligne d'intersection (OY) entre le premier plan symétrique (A1) et le second plan symétrique (A2) .

2. Réflecteur (100) selon la revendication 1, **caractérisé en ce que** la plaque de base (1) possède un second profil en forme d'aile de papillon et définit une seconde surface réfléchissante.

3. Réflecteur (100) selon la revendication 1 ou 2, **caractérisé en ce que** le premier plan symétrique (A1) et le second plan symétrique (A2) forment un angle de 45°.

4. Réflecteur (100) selon la revendication 1 ou 2, **caractérisé en ce que** la première courbe (C1) peut être obtenue par la formule *y* = -0,1111x2+5,1667*x*-27, où x et y sont une abscisse et une ordonnée d'un système de coordonnées *x-y* dans le premier plan symétrique (A1), respectivement.

5. Réflecteur (100) selon la revendication 1 ou 2, **caractérisé en ce que** la deuxième courbe (C2) peut être obtenue par la formule *y* = 0,2806x2+1,0937*x*-10,604, où x et y sont une abscisse et une ordonnée d'un système de coordonnées *x-y* dans le second plan symétrique (A2), respectivement.

6. Réflecteur (100) selon la revendication 1 ou 2, **caractérisé en ce que** le second profil en forme d'aile de papillon comprend quatre cinquièmes courbes (C5) symétriques par rapport au premier plan symétrique (A1) et quatre sixièmes courbes (C6) symétriques par rapport au second plan symétrique (A2), dans lequel les cinquièmes courbes (C5) et les sixièmes courbes (C6) sont espacées les unes des autres en transition douce.

7. Réflecteur (100) selon la revendication 6, **caractérisé en ce que** la cinquième courbe (C5) est configurée comme un arc circulaire ayant un second rayon prédéterminé (R2),
dans lequel le premier rayon prédéterminé (R1) est supérieur ou égal au second rayon prédéterminé (R2).

8. Réflecteur (100) selon la revendication 1 ou 2, **caractérisé en ce que** le réflecteur (100) comprend une base faite de métal ou de plastique, et un revêtement réfléchissant prévu sur la base.

9. Réflecteur (100) selon la revendication 8, **caractérisé en ce que** le revêtement réfléchissant est formé sur la base par un procédé de revêtement, de placage ou d'anodisation.

10. Dispositif d'éclairage, comprenant une source lumineuse (3), **caractérisé en ce que** le dispositif d'éclairage comprend en outre un réflecteur (100) selon l'une quelconque des revendications 1 à 9, dans lequel la source lumineuse est disposée au niveau d'un centre symétrique (0) de la plaque de base (1) dans une cavité de réception définie par le réflecteur (100).

11. Dispositif d'éclairage selon la revendication 10, **caractérisé en ce que** la source lumineuse (3) est une source lumineuse à diode électroluminescente (DEL).
